(19) Europäisches Patentamt
European Patent Office
Office européen des brevets

(11) **EP 2 834 595 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(51) Int Cl.:
**G01B 21/04** *(2006.01)*    **B23Q 17/22** *(2006.01)*

(21) Anmeldenummer: **13713403.7**

(86) Internationale Anmeldenummer:
**PCT/EP2013/056123**

(22) Anmeldetag: **22.03.2013**

(87) Internationale Veröffentlichungsnummer:
**WO 2013/149862 (10.10.2013 Gazette 2013/41)**

(54) **VERFAHREN UND VORRICHTUNG ZUM REDUZIEREN VON FEHLERN EINER DREHVORRICHTUNG BEI DER BESTIMMUNG VON KOORDINATEN EINES WERKSTÜCKS ODER BEI DER BEARBEITUNG EINES WERKSTÜCKS**

METHOD AND APPARATUS FOR REDUCING ERRORS OF A ROTATING DEVICE WHEN DETERMINING COORDINATES OF A WORKPIECE OR WHEN MACHINING A WORKPIECE

MÉTHODE ET APPAREIL POUR LA RÉDUCTION DES ERREURS ASSOCIÉES À UN DISPOSITIF DE ROTATION LORS DE LA DÉTERMINATION DES COORDONNÉES D'UNE PIÈCE OU LORS DE L'USINAGE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2012 DE 102012205599**

(43) Veröffentlichungstag der Anmeldung:
**11.02.2015 Patentblatt 2015/07**

(73) Patentinhaber: **Carl Zeiss Industrielle Messtechnik GmbH**
**73447 Oberkochen (DE)**

(72) Erfinder:
• **SAGEMÜLLER, Rainer**
**73434 Aalen (DE)**
• **SEITZ, Dominik**
**73525 Schwäbisch Gmünd (DE)**
• **ENGEL, Thomas**
**73432 Aalen (DE)**

(74) Vertreter: **Patentanwälte Bressel und Partner mbB**
**Potsdamer Platz 10**
**10785 Berlin (DE)**

(56) Entgegenhaltungen:
**DE-A1- 19 815 098     DE-A1-102005 023 467**
**JP-A- H05 162 051**

EP 2 834 595 B1

**Beschreibung**

Die Erfindung betrifft ein Verfahren zum Reduzieren von Fehlern einer Drehvorrichtung bei der Bestimmung von Koordinaten eines Werkstücks oder bei der Bearbeitung eines Werkstücks. Die Drehvorrichtung ermöglicht eine Drehbewegung des Werkstücks um eine Drehachse der Drehvorrichtung während der Bestimmung der Koordinaten oder während der Bearbeitung des Werkstücks. Die Erfindung betrifft ferner eine Anordnung, mit der das Verfahren ausführbar ist. Dabei wird davon ausgegangen, dass die Fehler der Drehvorrichtung zumindest zu einem Teil reproduzierbar sind.

Es ist bekannt, Werkstücke zum Zweck der Messung ihrer Koordinaten oder zum Zweck der Bearbeitung des Werkstücks drehbar zu lagern. Z.B. werden auf dem Gebiet der Koordinatenmesstechnik Werkstücke auf drehbaren Tischen (so genannte Drehtische) angeordnet. Auf diese Weise kann das Werkstück in verschiedene Arbeitsausrichtungen gebracht werden, in denen das Koordinatenmessgerät arbeitet, d.h. Koordinaten des Werkstücks misst. Insbesondere können die Koordinaten des Werkstücks kontinuierlich (z. B. scannend) gemessen werden, während die Drehvorrichtung das Werkstück um ihre Drehachse dreht.

Entsprechendes gilt für die Bearbeitung eines Werkstücks durch eine Werkzeugmaschine. Das Werkstück kann in verschiedene Arbeitsausrichtungen gebracht werden, um das Werkzeug zu bearbeiten. Insbesondere kann das Werkstück kontinuierlich gedreht werden, während es bearbeitet wird.

Die Arbeitsausrichtung kann insbesondere durch eine Richtung definiert sein, die sich senkrecht zu der Drehachse und durch einen Punkt auf der Oberfläche des Werkstücks erstreckt, an dem das Werkstück abgetastet wird oder an dem das Werkstück bearbeitet wird. Die beim taktilen Antasten des Werkstücks mit einem Taster oder beim Bearbeiten des Werkstücks auf das Werkstück wirkende Kraft kann daher insbesondere senkrecht zu der Drehachse in Richtung der Arbeitsausrichtung wirken.

Auf dem Gebiet der Koordinatenmesstechnik ist es häufig zur Formprüfung eines Werkstücks vorteilhaft, das Werkstück mit einem Taster abzutasten, der eine nahezu konstante Arbeitsausrichtung und Arbeitsposition relativ zu der Drehvorrichtung hat, während die Drehvorrichtung das Werkstück dreht. Die Arbeitsposition und Arbeitsausrichtung sind nicht völlig konstant, da das Werkstück in der Regel nicht exakt rotationssymmetrisch zu der Drehachse der Drehvorrichtung angeordnet ist und/oder nicht oder nicht exakt rotationssymmetrisch geformt ist. Z.B. kann ein Taster eines Koordinatenmessgeräts, der die Oberfläche des Werkstücks taktil antastet, von dem Koordinatenmessgerät in einer festen Position und bei einer festen Ausrichtung gehalten werden, wobei der Taster abhängig von der zu messenden Form des Werkstücks unterschiedlich weit relativ zu einer Halterung des Tasters ausgelenkt wird. Durch die nahezu konstante Arbeitsausrichtung und Arbeitsposition können Fehler der Koordinatenmessung aufgrund von positionsabhängigen und ausrichtungsabhängigen Fehlern des Koordinatenmessgeräts minimiert werden. Die Fehler der Drehvorrichtung bestimmen in diesem Fall das Messergebnis maßgeblich. Auch die Geschwindigkeit der Vermessung des Werkstücks kann in vielen Fällen auf diese Weise gesteigert werden.

Zur Reduzierung der Fehler der Drehvorrichtung kann die Drehvorrichtung so konstruiert werden, dass der Fehler Vorgaben erfüllt. Insbesondere können Luftlagerungen zur Lagerung der drehbeweglichen Teile der Drehvorrichtung eingesetzt werden und bei motorisch angetriebenen Drehvorrichtungen Direktantriebe eingesetzt werden. Je kleiner der Fehler der Drehvorrichtung sein soll, desto höher ist der konstruktive Aufwand.

Alternativ oder zusätzlich können Fehler der Drehvorrichtung mit einem Koordinatenmessgerät gemessen werden, wobei ein Kalibrierkörper oder eine Anordnung von Kalibrierkörpern an dem drehbaren Teil der Drehvorrichtung angeordnet wird (z.B. auf den Drehtisch gestellt wird) und vermessen wird. Die Vermessung der Fehler der Drehvorrichtung bezüglich aller sechs möglichen Freiheitsgrade der Bewegung ist jedoch zeitaufwendig. Bei hoher geforderter Genauigkeit muss die Kalibrierung wiederholt werden, beispielsweise wenn die Drehvorrichtung Temperaturschwankungen ausgesetzt ist. Entsprechendes gilt für eine Drehvorrichtung, die ausgestaltet ist, Werkstücke im Bearbeitungsbereich einer Werkzeugmaschine drehbar zu halten. Der Aufwand für eine Kalibrierung ist in diesem Fall im Vergleich zur Koordinatenmesstechnik meist noch größer, da auf dem Gebiet der Koordinatenmesstechnik meist das Koordinatenmessgerät für die Kalibrierung eingesetzt werden kann, das auch später die Vermessung von Werkstücken durchführt.

Eric Marsh beschreibt in "Precision Spindle Metrology", ISBN 978-1-932078-77-0, insbesondere Kapitel 2, Konzepte zur Beschreibung von Bewegungsfehlern einer Präzisionsspindel.

DE 198 15 098 A1 betrifft den Einsatz von Drehtischen auf Koordinatenmessgeräten. Die vom Drehtisch ausgegebenen Winkelwerte und die Abweichungen der Achse des Drehtisches von einer idealen Drehachse sollen möglichst gering sein und die Messunsicherheit des Koordinatenmessgerätes nicht vergrößern. Ein Prüfkörper wird in drei Messstellungen auf dem Drehtisch angeordnet und gemessen. Aus Messreihen der drei Messstellungen werden die Abweichungen des Drehtisches ermittelt.

DE 10 2005 023 beschreibt ein Verfahren zur Überwachung einer lastbedingten Taumelbewegung eines mit einem Körper belasteten Drehtischs. Unter Drehung des Drehtischs werden über einen vorgegebenen Winkelbereich aktuelle Taumelbewegungsdaten ermittelt, aus denen Werte eines Taumelfehlers des Drehtischs ermittelt werden können. Aus den ermittelten aktuellen Taumelbewegungsdaten wird unter Verwendung von Taumelfehlervergleichsdaten, die Werte eines für den unbelasteten Drehtisch ermittelten Taumelfehlers des Drehtischs wiedergeben, ein lastbedingter Taumelfehler ermittelt.

JP-A-05 162 051 beschreibt ein Verfahren zum Kalibrieren von gespeicherten Winkeldaten eines Drehtischs. Mittels einer reflektierenden Referenzplatte an dem Drehtisch und eines optischen Sensors wird ein Drehstellungsfehler des Drehtischs gemessen und werden entsprechende Kalibrierdaten ermittelt.

Es ist eine Aufgabe der vorliegenden Erfindung, ein Verfahren zum Reduzieren von Fehlern einer Drehvorrichtung bei der Bestimmung von Koordinaten eines Werkstücks oder bei der Bearbeitung eines Werkstücks anzugeben, das geringen messtechnischen und konstruktiven Aufwand erfordert, um den Fehler der Drehvorrichtung gering zu halten. Insbesondere sollen die oben bereits beschriebenen Verfahrensweisen der Vermessung eines Werkstücks oder der Bearbeitung eines Werkstücks bei geringem Aufwand möglich sein. Ferner ist es eine Aufgabe der vorliegenden Erfindung, eine Anordnung zur Durchführung des Verfahrens anzugeben.

Die Erfindung geht von der Erkenntnis aus, dass Drehvorrichtungen für Koordinatenmessgeräte und Werkzeugmaschinen in vielen Fällen verschiedene Fehlerquellen aufweisen, die zu verschiedenen Fehlerbeiträgen zum Gesamtfehler der Drehvorrichtung führen. Insbesondere sind diese verschiedenen Fehlerbeiträge translatorische Fehler, d.h. die Drehachse bewegt sich in geradliniger Richtung während der Drehbewegung, und rotatorische Fehler, d.h. die Drehachse ist abhängig von der Drehstellung der relativ zueinander drehbeweglichen Teile der Drehvorrichtung unterschiedlich gegen die ideale, nicht veränderliche Drehachse geneigt und/oder verläuft in unterschiedlicher Weise windschief zu der idealen Drehachse. Die unterschiedlichen Fehlerbeiträge kompensieren sich oder verstärken sich, je nach Arbeitsposition und Arbeitsausrichtung der Koordinaten-Messeinrichtung oder des Bearbeitungswerkzeuges der Werkzeugmaschine relativ zur Drehvorrichtung.

Außerdem beruht die Erfindung auf der Erkenntnis, dass sich einzelne Fehlerquellen bei bestimmten Arbeitspositionen und Arbeitsausrichtungen nicht oder geringer als bei anderen Arbeitsausrichtungen und Arbeitspositionen auf den Fehler der Messung oder Bearbeitung des Werkstücks auswirken. Z.B. kann die tatsächliche Drehachse der Drehvorrichtung um eine Koordinatenachse kippen, die senkrecht zu der idealen Drehachse verläuft. Dabei kann sich der Kippwinkel (der Winkel zwischen der realen und der idealen Drehachse) während einer Drehbewegung der Drehvorrichtung ändern. Bei einer Messung oder Bearbeitung eines Werkstücks in einer Arbeitsausrichtung, die in Richtung der genannten Koordinatenachse verläuft, verändert sich aufgrund dieser Fehlerquelle die Position eines von der Drehvorrichtung gedrehten Werkstücks nicht. Dagegen verändert sich aber die Position des Werkstücks aufgrund dieser Fehlerquelle (d.h. aufgrund der Kippbewegung) in Richtungen, die senkrecht zu der idealen Drehachse und senkrecht zu der genannten Koordinatenachse verlaufen und die die Koordinatenachse nicht schneiden. Je nach axialem Abstand von dem Zentrum der Kippbewegung (der axiale Abstand wird in Richtung der idealen Drehachse bestimmt) wirkt sich der Fehler dieser Fehlerquelle stärker oder schwächer aus.

Ein Beitrag zur Lösung der o.g. Aufgabe besteht daher darin, zumindest eine Arbeitsposition und/oder eine Arbeitsausrichtung der Koordinaten-Messeinrichtung oder des Bearbeitungswerkzeuges zu ermitteln, für die der erwartete Fehler der Drehvorrichtung klein ist und/oder eine vorgegebene Bedingung erfüllt. Die vorgegebene Bedingung fordert z.B., dass der Fehler der Drehvorrichtung einen bestimmten Fehlerwert nicht erreicht oder nicht überschreitet. Insbesondere kann zumindest eine Arbeitsposition und/oder Arbeitsausrichtung ermittelt werden, für die der Fehler der Drehvorrichtung kleiner ist als für andere Arbeitspositionen und/oder Arbeitsausrichtungen.

Bei der Ermittlung der zumindest einen Arbeitsposition und/oder Arbeitsausrichtung kann insbesondere eine vorgegebene Mess-Aufgabe zur Bestimmung von Koordinaten des Werkstücks oder eine vorgegebene Bearbeitungs-Aufgabe zur Bearbeitung des Werkstücks berücksichtigt werden. Z.B. kann die Aufgabe die Arbeitsausrichtung der Koordinaten-Messeinrichtung oder des Bearbeitungswerkzeugs festlegen oder einen möglichen oder zulässigen Bereich für die Arbeitsausrichtung festlegen. Das gleiche kann für die Arbeitsposition gelten. Bezüglich der Arbeitsausrichtung werden zwei Arbeitsausrichtungen insbesondere als identisch angesehen, wenn sie parallel zueinander verlaufen, d.h. durch Parallelverschiebung miteinander zur Deckung gebracht werden können. Insbesondere kann die Arbeitsposition als axiale Arbeitsposition definiert sein, d.h. die Arbeitsposition wird als Koordinatenwert einer Koordinatenachse (z.B. z-Achse genannt) angegeben, die mit der idealen Drehachse zusammenfällt. Insbesondere in diesem Fall kann die Arbeitsausrichtung immer als senkrecht zu der idealen Drehachse verlaufend definiert sein, wenn z.B. Kräfte beim Antasten eines Werkstücks oder Bearbeiten eines Werkstücks senkrecht zur idealen Drehachse ausgeübt werden.

Z.B kann ein Bearbeitungswerkzeug lediglich in einer bestimmten Arbeitsausrichtung an der Werkzeugmaschine betrieben werden. Entsprechend kann die Beweglichkeit eines taktilen oder optischen Tasters eines Koordinatenmessgeräts, mit dem ein Werkstück vermessen werden soll, z.B. aus Gründen der Reduzierung des Messfehlers so eingeschränkt sein, dass lediglich eine Arbeitsausrichtung oder ein kleiner Bereich von verschiedenen Arbeitsausrichtungen möglich ist. Abhängig von dem zu vermessenden oder zu bearbeitenden Werkstück kann es alternativ oder zusätzlich lediglich möglich sein, die Koordinaten-Messeinrichtung oder das Bearbeitungswerkzeug in einer bestimmten Arbeitsposition oder in einem bestimmten Bereich von Arbeitspositionen relativ zu der Drehvorrichtung anzuordnen. Wenn es sich z.B. um ein sehr langes Werkstück handelt, dessen Ende vermessen werden soll und das in axialer Richtung der Drehachse der Drehvorrichtung auszurichten ist, kann das Ende des Werkstücks z.B. entweder sehr dicht an einer Halterung der Drehvorrichtung oder sehr weit weg von dieser Halterung angeordnet werden.

Es soll daher nochmals betont werden, dass sowohl die Arbeitsposition als auch die Arbeitsausrichtung auf die Drehvorrichtung bezogen sind und nicht auf das Werkstück. Bezüglich der Fehler der Drehvorrichtung kommt es meist ausschließlich oder überwiegend auf diese Arbeitsposition und/oder diese Arbeitsausrichtung bezüglich der Drehvorrichtung an. Darüber hinaus kann es noch weitere Einflüsse auf den Fehler der Drehvorrichtung geben, z.B. das Gewicht des Werkstücks, das Trägheitsmoment des Werkstücks, die Kraft, die die Koordinaten-Messeinrichtung oder das Bearbeitungswerkzeug auf das Werkstück ausübt, andere Parameter der Vermessung/Bearbeitung des Werkstücks (z. B. Schnitttiefe des Werkzeugs) und/oder die Drehgeschwindigkeit, mit der die Drehvorrichtung das Werkstück dreht. Bei einer Ausgestaltung der vorliegenden Erfindung kann zumindest einer dieser zusätzlichen Einflussfaktoren und/oder jede beliebige Kombination dieser Einflussfaktoren in die Ermittlung des Fehlers der Drehvorrichtung bei der jeweiligen Arbeitsausrichtung und/oder Arbeitsposition eingehen. Z.B. kann eine Messung des Fehlers der Drehvorrichtung durchgeführt werden, während der jeweilige Einflussfaktor oder die jeweilige Kombination von Einflussfaktoren wirkt.

In vielen Fällen trägt der translatorische Fehler von Drehvorrichtungen weniger zum Gesamtfehler der Drehvorrichtung bei als der rotatorische Fehler, der auf eine Verkippung der tatsächlichen Drehachse relativ zur idealen Drehachse zurückzuführen ist. Wie oben erwähnt, kann der Kippwinkel je nach Drehstellung der Drehvorrichtung schwanken. Fehlerbeiträge aufgrund von einem konstanten, sich mit der Drehbewegung nicht ändernden Kippwinkel, können auf einfache Weise ermittelt und z.B. korrigiert werden, indem die Ausrichtung der idealen Drehachse so verändert wird, dass sie mit der gekippten Drehachse zusammenfällt.

Die Ermittlung der bezüglich des Fehlers der Drehvorrichtung günstigen Arbeitspositionen und Arbeitsausrichtungen hat nicht nur den Vorteil reduzierter Fehler, sondern lässt sich, wie im Folgenden beschrieben wird, auch mit besonders geringem Messaufwand bestimmen. Da mit reduziertem Fehler Koordinaten von Werkstücken gemessen werden können oder Werkstücke bearbeitet werden können, kann auch der konstruktive Aufwand für die Drehvorrichtungen reduziert werden.

Vorzugsweise wird der Fehler der Drehvorrichtung nicht für alle möglichen Arbeitspositionen und/oder Arbeitsausrichtungen der Koordinaten-Messeinrichtung oder des Bearbeitungswerkzeugs gemessen und/oder vorzugsweise wird der Fehler der Drehvorrichtung nicht für alle Arbeitsposition(en) und/oder Arbeitsausrichtung(en) gemessen, die bei einer vorgegebenen Mess-Aufgabe oder einer vorgegebenen Bearbeitungs-Aufgabe vorkommt/vorkommen. Vielmehr wird bevorzugt, dass der Fehler der Drehvorrichtung lediglich für einige Drehstellungen der Drehvorrichtung und lediglich für wenige, z.B. zwei axiale (bezogen auf die Drehachse der Drehvorrichtung), Messpositionen gemessen wird. Alternativ kann der Fehler der Drehvorrichtung zum Beispiel an zumindest einer axialen Position der Drehachse kontinuierlich oder quasi kontinuierlich während einer Drehbewegung des drehbaren Teils der Drehvorrichtung gemessen werden. Dies ist zum Beispiel unter Verwendung von kapazitiven oder optischen Messsensoren möglich, die die Position oder die Relativposition eines gemeinsam mit dem drehbaren Teil der Drehvorrichtung drehenden Prüfkörpers (auch Kalibrierkörper genannt) messen. Vorzugsweise wird der Fehler der Drehachse in jedem Fall so gemessen, dass alle Fehlerquellen oder alle wesentlichen Fehlerquellen berücksichtigt werden. Wesentlich ist eine Fehlerquelle, wenn sie einen wesentlichen Beitrag zu dem Gesamtfehler der Drehvorrichtung liefert oder liefern kann.

Z.B. können translatorische Fehler einer Drehvorrichtung an der axialen Position einer Drehlagerung vernachlässigt werden, wenn die Drehlagerung an dieser axialen Position keine translatorischen Abweichungen quer zur Drehachse zulässt. Die Messanordnung ist daher so zu konstruieren und die Messung ist entsprechend durchzuführen, dass Fehler bezüglich aller relevanten Freiheitsgrade der Bewegung der realen Drehachse relativ zur idealen Drehachse erfasst werden. Auf Ausführungsbeispiele der Messanordnung wird noch näher eingegangen. Z.B. kann ein Kalibrierkörper zur Durchführung der Messung an dem drehbaren Teil der Drehvorrichtung angeordnet werden, wobei der Kalibrierkörper an zumindest zwei verschiedenen axialen Positionen einen bezüglich der realen Drehachse rotationssymmetrischen Messkörper aufweist und wobei bei verschiedenen Drehstellungen des drehbaren Teils der Drehvorrichtung jeweils an den axialen Positionen der Messkörper deren radiale Position in zwei verschiedenen, einander kreuzenden Richtungen gemessen werden. Auf diese Weise können an den axialen Messpositionen unmittelbar die von der Drehstellung abhängigen radialen Positionen gemessen werden und daraus auch die Verkippung der realen Drehachse relativ zur idealen Drehachse ermittelt werden, z.B. jeweils für die einzelnen Drehstellungen. Statt eines einzigen Kalibrierkörpers kann auch eine Anordnung von mehreren Kalibrierkörpern verwendet werden. Statt des zuvor beschriebenen Kalibrierkörpers kann z.B. auch ein anderer Kalibrierkörper verwendet werden, z.B. eine Mehrzahl von Kalibrierkugeln, die etwa an der gleichen axialen Position der Drehachse nebeneinander angeordnet sind und miteinander verbunden sind, z.B. in Form einer so genannten Kugelplatte. Mit an sich bereits bekannten Messverfahren können die Positionen der Kugelmittelpunkte der Kugeln im Raum (d.h. deren dreidimensionale Koordinaten) gemessen werden, und zwar für verschiedene Drehstellungen der Drehvorrichtung.

Durch die Messungen werden gemessene Fehler der Drehvorrichtung erhalten. Aus diesen gemessenen Fehlern können nun erwartete Fehler der Drehvorrichtung ermittelt werden, die jeweils für eine Arbeitsposition und Arbeitsausrichtung einer Koordinaten-Messeinrichtung oder eines Bearbeitungswerkzeugs einer Werkzeugmaschine erwartet werden. Dabei kann insbesondere zwischen gemessenen Fehlerwerten interpoliert werden und/oder extrapoliert werden. Außerdem kann zwischen bereits ermittelten erwarteten Fehlerwerten interpoliert und/oder extrapoliert werden. Im Ergebnis erhält man z.B. für einen Bereich möglicher Arbeitspositionen und/oder für einen Bereich möglicher Arbeitsausrichtungen der Koordinaten-Messeinrichtung oder des Bearbeitungswerkzeuges jeweils den erwarteten Fehler der Drehvorrichtung. Aus dem erwarteten Fehler, der an den Messpunkten der Fehlermessung gleich dem gemessenen Fehler sein kann, kann nun zumindest eine Arbeitsposition und/oder Arbeitsausrichtung ermittelt werden, insbesondere wie oben bereits allgemein für den Fehler der Drehvorrichtung beschrieben.

Insbesondere wird Folgendes vorgeschlagen: Ein Verfahren zum Reduzieren von Fehlern einer Drehvorrichtung bei der Bestimmung von Koordinaten eines Werkstücks oder bei der Bearbeitung eines Werkstücks, wobei die Drehvorrichtung eine Drehbewegung des Werkstücks um eine Drehachse der Drehvorrichtung während der Bestimmung der Koordinaten oder während der Bearbeitung des Werkstücks ermöglicht, und wobei das Verfahren folgende Schritte aufweist:

- Fehler der Drehvorrichtung aufgrund von Abweichungen zwischen tatsächlichen Positionen und tatsächlichen Ausrichtungen der Drehachse einerseits und entsprechenden idealen Positionen und idealen Ausrichtungen der Drehachse andererseits werden in einem Bereich von Drehwinkeln, d.h. bei verschiedenen Drehstellungen zweier relativ zueinander um die Drehachse drehbeweglicher Teile der Drehvorrichtung, gemessen und es werden entsprechende Fehlermesswerte erhalten,
- aus den Fehlermesswerten werden erwartete Fehlerwerte der Drehvorrichtung ermittelt, die jeweils für eine relative Arbeitsposition und Arbeitsausrichtung einer Koordinaten-Messeinrichtung zur Bestimmung der Koordinaten des Werkstücks oder eines Bearbeitungswerkzeug einer Werkzeugmaschine zur Bearbeitung des Werkstücks einerseits und der Drehvorrichtung andererseits erwartet werden,
- aus den erwarteten Fehlerwerten der Drehvorrichtung wird zumindest eine Arbeitsposition und/oder Arbeitsausrichtung der Koordinaten-Messeinrichtung oder des Bearbeitungswerkzeug ermittelt, für die der erwartete Fehlerwert der Drehvorrichtung bei einer vorgegebenen Mess-Aufgabe zur Bestimmung von Koordinaten des Werkstücks oder einer vorgegebenen Bearbeitungs-Aufgabe zur Bearbeitung des Werkstücks

- o kleiner ist als für andere Arbeitspositionen und/oder Arbeitsausrichtungen und/oder
- o eine vorgegebene Bedingung erfüllt.

Außerdem wird vorgeschlagen: Eine Anordnung zum Reduzieren von Fehlern einer Drehvorrichtung bei der Bestimmung von Koordinaten eines Werkstücks oder bei der Bearbeitung eines Werkstücks, wobei die Drehvorrichtung eine Drehbewegung des Werkstücks um eine Drehachse der Drehvorrichtung während der Bestimmung der Koordinaten oder während der Bearbeitung des Werkstücks ermöglicht, und wobei die Anordnung Folgendes aufweist:

- eine Messeanordnung, die ausgestaltet ist, Fehler der Drehvorrichtung aufgrund von Abweichungen zwischen tatsächlichen Positionen und tatsächlichen Ausrichtungen der Drehachse einerseits und entsprechenden idealen Positionen und idealen Ausrichtungen der Drehachse andererseits in einem Bereich von Drehwinkeln, d.h. bei verschiedenen Drehstellungen zweier relativ zueinander um die Drehachse drehbeweglicher Teile der Drehvorrichtung, zu messen und entsprechende Fehlermesswerte an eine Prognoseeinrichtung auszugeben,
- die Prognoseeinrichtung, die ausgestaltet ist, aus den Fehlermesswerten erwartete Fehlerwerte der Drehvorrichtung zu ermitteln, die jeweils für eine relative Arbeitsposition und Arbeitsausrichtung einer Koordinaten-Messeinrichtung zur Bestimmung der Koordinaten des Werkstücks oder eines Bearbeitungswerkzeug einer Werkzeugmaschine zur Bearbeitung des Werkstücks einerseits und der Drehvorrichtung andererseits erwartet werden,
- eine Ermittlungseinrichtung, die ausgestaltet ist, aus den erwarteten Fehlerwerten der Drehvorrichtung zumindest eine Arbeitsposition und/oder Arbeitsausrichtung der Koordinaten-Messeinrichtung oder des Bearbeitungswerkzeug zu ermitteln, für die der erwartete Fehlerwert der Drehvorrichtung bei einer vorgegebenen Mess-Aufgabe zur Bestimmung von Koordinaten des Werkstücks oder einer vorgegebenen Bearbeitungs-Aufgabe zur Bearbeitung des Werkstücks

- o kleiner ist als für andere Arbeitspositionen und/oder Arbeitsausrichtungen und/oder
- o eine vorgegebene Bedingung erfüllt.

Insbesondere können verschiedene Fehler der Drehvorrichtung, getrennt nach Fehlerquellen und/oder getrennt nach Freiheitsgraden der Bewegung der realen Drehachse relativ zur idealen Drehachse gemessen und/oder ermittelt werden. Verschiedene Fehlerquellen sind z.B. Verkippungen der realen Drehachse in verschiedene Richtungen und Verschiebungen der realen Drehachse in verschiedene Richtungen. Verschiedene Freiheitsgrade der Bewegung der realen Drehachse relativ zur idealen Drehachse sind z.B. translatorische Freiheitsgrade quer zur realen oder idealen Drehachse sowie in Richtung der realen oder idealen Drehachse. Aus den verschiedenen Fehlern können z.B. unmittelbar Erkenntnisse über günstige Arbeitspositionen und/oder Arbeitsausrichtungen gewonnen werden. Es ist aber auch möglich, den erwarteten Gesamtfehler der Drehvorrichtung auszuwerten, z.B. an bestimmten Arbeitspositionen und/oder Arbeitsausrichtungen oder in Bereichen der Arbeitsposition und/oder in Bereichen der Arbeitsausrichtung.

Insbesondere ist es auch möglich, Kenntnisse über die erwartete Form des Werkstücks, dessen Koordinaten gemessen werden sollen, bei der Auswertung der erwarteten Fehlerwerte und insbesondere des erwarteten Gesamtfehlers zu berücksichtigen. Z.B. kann das Werkstück in einem bekannten Herstellungsverfahren hergestellt worden sein, das über einen im Wesentlichen rotationssymmetrischen Verlauf der Oberfläche des Werkstücks periodisch Abweichungen von der idealen rotationssymmetrischen Form erwarten lässt. Durch eine Simulation des Messprozesses der Messung der Koordinaten oder zumindest von Teilen des Messprozesses kann eine Arbeitsposition und/oder eine Arbeitsausrichtung der Koordinaten-Messeinrichtung ermittelt werden, die es erlaubt/erlauben, die periodischen Formabweichungen des Werkstücks von der Idealform mit geringem Fehler zu bestimmen. Z.B. kann es die Mess-Aufgabe verlangen, dass die Stellen an der Oberfläche des Werkstücks, für die die größten Formabweichungen von der Idealform erwartet werden, mit einem Fehler gemessen werden können, der kleiner als ein vorgegebener Grenzwert ist. Alternativ kann diejenige Messausrichtung bezüglich der Drehvorrichtung bestimmt werden, bei der die periodischen Formabweichungen mit dem geringsten erwarteten Fehler der Drehvorrichtung gemessen werden können.

Insbesondere wie zuvor beschrieben, kann die zumindest eine Arbeitsposition und/oder Arbeitsausrichtung durch Simulation der Koordinatenmessung oder Bearbeitung des Werkstücks ermittelt werden. Daher wird die Arbeitsposition und/oder Arbeitsausrichtung optimal für die jeweilige Aufgabe ermittelt.

Insbesondere kann bei der Ermittlung der zumindest einen Arbeitsposition und/oder Arbeitsausrichtung eine Mess-Aufgabe zu Grunde gelegt werden, gemäß der die Oberfläche des Werkstücks scannend abgetastet wird. Das scannende (zum Beispiel taktile oder optische) Abtasten des Werkstücks wird häufig zum Beispiel zur Vermessung von annähernd rotationssymmetrischen Oberflächenbereichen eingesetzt und führt in kurzer Zeit zu Messergebnissen.

Die Erfindung hat den Vorteil, dass die Messung des Fehlers der Drehvorrichtung gegenüber einer vollständigen Kalibrierung vereinfacht ist, da aus den gemessenen Fehlern erwartete Fehler berechnet werden. Daher kann die Messung des Fehlers der Drehvorrichtung öfter wiederholt werden, zum Beispiel jedes Mal vor der Vermessung oder Bearbeitung eines Werkstücks.

Insbesondere wird die zumindest eine aus den erwarteten Fehlerwerten der Drehvorrichtung ermittelte Arbeitsposition und/oder Arbeitsausrichtung von einer Ermittlungseinrichtung an eine Steuerung der Koordinaten-Messeinrichtung oder der Werkzeugmaschine ausgegeben. Dabei ist es möglich, dass die Ermittlungseinrichtung Teil der Steuerung ist. In diesem Fall wird an einen weiteren Teil der Steuerung ausgegeben, der die Vermessung des Werkstücks durch die Koordinaten-Messeinrichtung oder die Bearbeitung des Werkstücks durch die Werkzeugmaschine steuert. Auf diese Weise kann automatisch nach der Ermittlung der zumindest einen Arbeitsposition und/oder Arbeitsausrichtung eine Vermessung des Werkstücks oder eine Bearbeitung des Werkstücks begonnen werden.

Bei der Koordinaten-Messeinrichtung handelt es sich zum Beispiel um einen Taster zum taktilen Abtasten oder optischen Abtasten des Werkstücks. Alternativ kann es sich um einen Sensor (zum Beispiel einen Messkopf) handeln, der ausgestaltet ist abhängig von der Vermessung des Werkstücks Signale zu erzeugen, aus denen die Koordinaten des Werkstücks bestimmbar sind. Die Koordinaten-Messeinrichtung ist zum Beispiel Teil eines Koordinatenmessgerätes. Bei dem Bearbeitungswerkzeug der Werkzeugmaschine kann sich zum Beispiel um ein Schneidwerkzeug oder Schleifwerkzeug handeln.

Zum Umfang der Erfindung gehört auch ein Koordinatenmessgerät mit der Anordnung zur Reduktion des Fehlers einer Drehvorrichtung. Insbesondere kann das Koordinatenmessgerät die Ermittlungseinrichtung mit einer Steuerung des Koordinatenmessgerätes verbunden sein, so dass die Steuerung gemäß der ermittelten zumindest einen Arbeitsposition und/oder Arbeitsausrichtung der Koordinaten-Messeinrichtung eine Messung von Koordinaten eines Werkstücks steuern kann.

Wie bereits erwähnt, kann die Erfindung auf dem Gebiet der Werkzeugmaschinen angewendet werden. Häufig weisen Werkzeugmaschinen zwei Drehvorrichtungen (meist als Spindeln bezeichnet) auf. Die eine Spindel dreht das Werkstück während der Bearbeitung. Die andere Spindel erlaubt eine Drehung des Bearbeitungswerkzeugs. Dabei sind die Drehachsen der beiden Spindeln in vielen Fällen parallel zueinander. Durch die Erfindung kann die Werkzeugspindel in eine günstige Drehposition (und damit in eine entsprechende Arbeitsausrichtung) gebracht werden und/oder in eine günstige Arbeitsposition entlang der Drehachse der Werkstückspindel.

Insbesondere kann aus den ermittelten erwarteten Fehlerwerten der Drehvorrichtung eine Fehlerkarte oder ein Fehler-Modell erzeugt werden. Die Karte oder das Modell können z.B. in einem Datenspeicher gespeichert werden, auf den die Steuerung des Koordinatenmessgeräts oder der Werkzeugmaschine Zugriff hat. Der Unterschied zwischen einer Fehlerkarte und einem Fehler-Modell besteht darin, dass in der Fehlerkarte die Fehlerwerte für die jeweiligen Arbeitspositionen und/oder Arbeitsausrichtungen hinterlegt sind, während ein Fehler-Modell zumindest eine Berechnungsvorschrift enthält, wie aus Informationen über die Fehlerwerte an gewünschten Arbeitspositionen und/oder Arbeitsausrichtungen die erwarteten Fehlerwerte berechnet werden können. Eine Kombination von Fehlerkarte und Fehler-Modell ist möglich. Z.B. kann das Fehler-Modell festlegen, wie aus in der Fehlerkarte enthaltenen Fehlerwerten für andere Arbeitspositionen und/oder Arbeitsausrichtungen erwartete Fehlerwerte bestimmt werden. Insbesondere können auch die oben erwähnten weiteren Einflüsse auf den Fehler der Drehvorrichtung, z.B. das Gewicht des Werkstücks, durch unterschiedliche, jeweils dem Einflussfaktor oder einer Kombination von Einflussfaktoren zugeordnete Fehlerkarten und/oder Fehler-Modelle berücksichtigt werden. Auch hierbei ist eine Kombination von Fehlerkarten und Fehler-Modellen möglich.

Insbesondere kann ein Fehler-Modell Informationen über die Drehvorrichtung besitzen (z.B. die Steifigkeit der Lagerung des drehbeweglichen Teils der Drehvorrichtung) und unter Verwendung dieser Informationen erwartete Fehlerwerte der Drehvorrichtung für zumindest eine Arbeitsausrichtung und/oder eine Arbeitsposition berechnen, die für bestimmte, insbesondere vorgegebene Aufgaben zu erwarten sind. Z.B. kann das Fehler-Modell auf diese Weise die Veränderung der Arbeitsbedingungen aufgrund von bei der Bearbeitung des Werkstücks oder beim Vermessen des Werkstücks wirkenden Kräften berücksichtigen.

Insbesondere kann die Steuerung des Koordinatenmessgeräts oder der Werkzeugmaschine bezüglich des Fehlers der Drehvorrichtung günstige Arbeitsausrichtungen und/oder Arbeitspositionen ermitteln und einem Benutzer vorschlagen. Wie oben erwähnt, kann die Steuerung diese günstigen Arbeitspositionen und/oder Arbeitsausrichtungen alternativ oder zusätzlich automatisch für den Arbeitsvorgang verwenden.

Auf dem Gebiet der Werkzeugmaschinen eignet sich die Erfindung insbesondere für schnell drehende Drehvorrichtungen, insbesondere Werkstückspindeln, da bei hohen Drehgeschwindigkeiten keine Kompensation des Fehlers der Drehvorrichtung, z.B. durch entsprechendes Nachführen des Bearbeitungswerkzeuges, möglich ist.

Die Erfindung eignet sich auch in Kombination mit rechnerischen Korrekturen des Fehlers der Drehvorrichtung. Z.B. kann die Drehvorrichtung kalibriert worden sein und können entsprechende Korrekturwerte zur Korrektur des Fehlers der Drehvorrichtung gespeichert sein, z.B. für den Zugriff der Steuerung des Koordinatenmessgeräts oder der Werkzeugmaschine. Das erfindungsgemäße Verfahren kann in diesem Fall unter Berücksichtigung der Korrekturen die erwarteten Restfehler für verschiedene Arbeitspositionen und/oder Arbeitsausrichtungen ermitteln und diese wie bereits beschrieben als erwartete Fehler der Drehvorrichtung nutzen.

Statt einer rechnerischen Korrektur der Fehler der Drehvorrichtung und der rechnerischen Ermittlung der erwarteten Restfehler kann die Messung der Fehler der Drehvorrichtung unter Berücksichtigung der Korrekturen durchgeführt werden und kann der Restfehler auf diese Weise gemessen werden. Daraus können wiederum die erwarteten Fehlerwerte ermittelt werden.

Ausführungsbeispiele der Erfindung werden nun unter Bezugnahme auf die beigefügte Zeichnung beschrieben. Die einzelnen Figuren der Zeichnung zeigen:

Fig. 1    eine Drehvorrichtung, insbesondere einen Drehtisch, für ein Koordinatenmessgerät, wobei auf dem drehbaren Teil der Drehvorrichtung ein rotationssymmetrisches Teil, hier ein Zylinder, angeordnet ist, dessen Symmetrieachse mit der Drehachse der Drehvorrichtung zusammenfällt und wobei schematisch eine bestimmte Arbeitsposition und Arbeitsausrichtung, z. B. eines Sensors eines Koordinatenmessgeräts, dargestellt ist,

Fig. 2    die Darstellung aus Fig. 1, wobei die Arbeitsausrichtung und Arbeitsposition des Sensors anders gewählt ist als in Fig. 1,

Fig. 3    eine Draufsicht auf die Anordnung in Fig. 2 zur Erläuterung des Winkels, den die Arbeitsausrichtung des Sensors mit einer Koordinatenachse einschließt,

Fig. 4    eine Anordnung mit einer Drehvorrichtung, insbesondere der Drehvorrichtung nach Fig. 1 bis Fig. 3, wobei mit der Drehvorrichtung ein Kalibrierkörper kombiniert ist, der zwei rotationssymmetrische Messkörper aufweist, um Verkippungen und Verschiebungen der realen Drehachse der Drehvorrichtung relativ zur idealen Drehachse der Drehvorrichtung zu messen,

Fig. 5    eine schematische Darstellung geometrischer Verhältnisse der realen und der idealen Drehachse einer Drehvorrichtung, z.B. der Drehvorrichtung nach einer der Fig. 1 bis 4,

Fig. 6    ein Diagramm, das den translatorischen Fehler einer Drehachse bezüglich einer Koordinatenachse (z. B. x-Achse), die senkrecht zur Drehachse der Drehvorrichtung verläuft und Teil eines ortsfesten Koordinatensystems ist, abhängig von dem Drehwinkel des drehbaren Teils der Drehvorrichtung relativ zum feststehenden Teil der Drehvorrichtung darstellt,

Fig. 7    ein Diagramm, das den Neigungsfehler (Kippwinkel) der realen Drehachse einer Drehvorrichtung relativ zur idealen Drehachse der Drehvorrichtung abhängig von dem Drehwinkel des drehbaren Teils relativ zum feststehenden Teil der Drehvorrichtung zeigt, wobei lediglich eine Verkippung um die Koordinatenachse (z. B. y-Achse) betrachtet wird, die senkrecht zu der Koordinatenachse (z. B. x-Achse) verläuft, bezüglich der der translatorische Fehler in Fig. 6 dargestellt ist, d.h. die Fehler gemäß der Darstellungen in Fig. 6 und Fig. 7 können sich verstärken oder kompensieren,

Fig. 8    eine Darstellung, die den resultierenden Fehler des in Fig. 6 dargestellten translatorischen Fehlers und des in Fig. 7 dargestellten rotatorischen Fehlers für eine vollständige Umdrehung der Drehvorrichtung abhängig von der Arbeitsposition entlang der Drehachse darstellt,

Fig. 9    ein Diagramm, das den translatorischen Fehler einer Drehvorrichtung ähnlich wie in Fig. 6, jedoch bezogen auf eine senkrecht sowohl zur Drehachse als auch zu der ersten Koordina-tenachse verlaufenden zweiten Koordinaten-achse als Funktion der Drehstellung des drehbeweglichen Teils zeigt,

Fig. 10   ein Diagramm, das entsprechend Fig. 7 den rotatorischen Fehler zeigt, der den in Fig. 9 dargestellten translatorischen Fehler verstärken oder kompensieren kann,

Fig. 11   den translatorischen Fehler bei einer bestimmten Arbeitsausrichtung aufgrund der in Fig. 6 und Fig. 9 dargestellten gemessenen translatorischen Fehler, abhängig von der Drehposition des drehbaren Teils der Drehvorrichtung,

Fig. 12   den Gesamtfehler der Drehvorrichtung, d.h. unter Berücksichtigung der translatorischen Fehler und der rotatorischen Fehler, für eine erste Arbeitsausrichtung und eine erste Arbeitsposition als Funktion der Drehposition des drehbaren Teils,

Fig. 13   den Gesamtfehler der Drehvorrichtung für eine zweite Arbeitsausrichtung und eine zweite Arbeitsposition als Funktion der Drehposition des drehbaren Teils

Fig. 14   den Gesamtfehler für eine dritte Arbeitsausrichtung und eine dritte Arbeitsposition als Funktion des Drehwinkels des drehbaren Teils und

Fig. 15   schematisch eine Anordnung mit einer Dreh-vorrichtung, einer Messanordnung, einer Pro-gnoseeinrichtung, einer Ermittlungseinrich-tung und einer Steuerung eines Koordinatenmessgeräts oder einer Werkzeugmaschine.

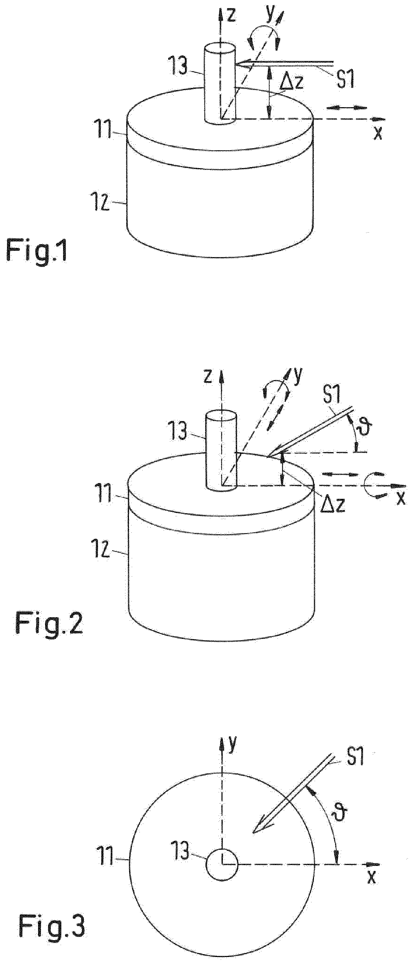

Die in Fig. 1 dargestellte Drehvorrichtung weist einen drehbaren Teil 11 auf, der relativ zu einem nicht drehbaren Teil 12 der Drehvorrichtung um eine ideale Drehachse drehbar ist, die in der Darstellung der Fig. 1 mit der z-Achse (z.B. die vertikale Achse) eines kartesischen Koordinatensystems x, y, z zusammenfällt. Die tatsächliche Drehachse der Drehvorrichtung 11, 12 weicht jedoch von der idealen Drehachse ab, da die Drehvorrichtung fehlerhaft ist.

Fig. 1 zeigt ein auf der Oberfläche des drehbaren Teils 11 angeordnetes zylindrisches Teil 13, dessen Zylinderachse in Richtung der realen Drehachse der Drehvorrichtung 11, 12 ausgerichtet ist. Für die folgenden Überlegungen wird angenommen, dass das zylindrische Teil 13 keinen Formfehler aufweist, d.h. ein idealer Zylinder ist. Wenn ein Sensor oder Taster eines Koordi-natenmessgeräts oder analog ein Bearbeitungswerk-zeug einer Werkzeugmaschine in der mit einem Doppellinien-Pfeil s1 dargestellten Richtung auf die Oberfläche des zylinderförmigen Teils 13 ausgerichtet ist, und wenn der drehbare Teil 11 der Drehvorrichtung gedreht wird und sich daher der zylinderförmige Teil 13 mitdreht, wirkt sich der Fehler der Drehvorrichtung, d.h. die Abweichung der realen Drehachse von der idealen Drehachse, auf die Vermessung oder Bearbeitung aus. Wie noch näher ausgeführt wird, wirkt sich der Fehler abhängig von der Arbeitsposition und Arbeitsausrichtung des Tasters, Sensors oder Werkzeugs in unterschiedlicher Weise aus. In dem in Fig. 1 dargestellten Fall ist die Arbeitsposition entlang der z-Achse des Koordinatensystems x, y, z um den Betrag $\Delta z$ nach oben verschoben und verläuft parallel zur x-Achse. Wie ein in zwei Richtung weisender Pfeil entlang der x-Achse andeutet, kann der Fehler der Drehvorrichtung 11, 12 die Umfangsoberfläche des zylindrischen Teils 13 entlang der x-Achse in beide Richtungen verschieben, d.h. bei einer vollständigen Umdrehung des drehbaren Teils 11 schwankt die x-Position des Oberflächenbereichs des Teils 13, auf den der Taster, Sensor oder das Werkzeug ausgerichtet ist, in x-Richtung hin und her.

Fig. 2 zeigt die Anordnung aus Fig. 1, wobei jedoch die Arbeitsausrichtung geändert ist. In dem dargestellten Fall liegt die Arbeitsposition ebenfalls wie in Fig. 1 um den Betrag $\Delta z$ über der x-, y-Ebene (diese Ebene ist z. B. auch die Ebene der Drehtischoberfläche) des Koordinatensystems. Die Arbeitsausrichtung verläuft ebenfalls senkrecht zur z-Achse, schließt jedoch mit einer Parallelen zu der x-Achse einen Winkel $\vartheta$ ein. Eine

entsprechende Draufsicht ist in Fig. 3 dargestellt.

Sowohl in Fig. 1 als auch in Fig. 2 ist durch Pfeile an gekrümmten Linien um die x-Achse bzw. y-Achse angedeutet, dass die reale Drehachse der Drehvorrichtung um die x-Achse und die y-Achse kippen (d.h. drehen bzw. rotieren) kann, während das drehbare Teil 11 gedreht wird.

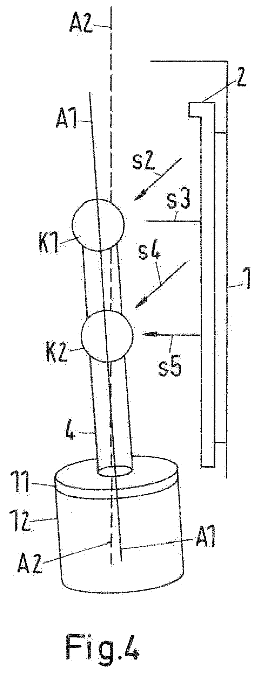

Die Messung des Fehlers einer Drehvorrichtung, insbesondere der Drehvorrichtung gemäß Fig. 1 bis Fig. 3, wird in Fig. 4 dargestellt. Die Messanordnung weist vier Messsensoren auf, deren Messrichtungen durch Pfeile dargestellt sind, die mit den Bezugszeichen s2, s3, s4, s5 bezeichnet sind. Die Messsensoren sind nicht näher dargestellt und können z.B. an einer gemeinsamen Halterung 2 befestigt sein, die an einer ortsfesten Einrichtung 1 angeordnet ist. Die Darstellung in Fig. 4 ist schematisch zu verstehen. In der Praxis sind unterschiedliche mechanische Ausgestaltungen der Anordnung möglich.

Die Messsensoren mit den Messrichtungen s2, s3 sind auf einen ersten kugelförmigen Bereich K1 eines Kalibrierkörpers 4 ausgerichtet. Die Messsensoren mit den Messrichtungen s4, s5 sind auf einen zweiten kugelförmigen Bereich K2 des Kalibrierkörpers 4 ausgerichtet. Dabei befinden sich die kugelförmigen Bereiche K1, K2 an verschiedenen axialen Positionen entlang der realen Drehachse A1 der Drehvorrichtung 11, 12. Aus Fig. 4 ist erkennbar, dass die reale Drehachse A1 gegen die ideale Drehachse A2 geneigt verläuft oder windschief zu dieser verläuft.

Bei dem Kalibrierkörper 4 in dem Ausführungsbeispiel der Fig. 4 handelt es sich um einen Stab, der sich mit seiner Längsachse in der Richtung der realen Drehachse A1 erstreckt und dabei die genannten kugelförmigen Bereiche K1, K2 aufweist. Die Mittelpunkte der kugelförmigen Bereiche K1, K2 befinden sich auf der realen Drehachse A1. Alternative Kalibrierkörper sind möglich. Z.B. kann ein zylindrischer Körper, z.B. der zylindrische Körper 13 aus Fig. 1 bis Fig. 3, als Kalibrierkörper verwendet werden und können die Sensoren jeweils paarweise auf unterschiedliche Höhenpositionen (bzw. z-Positionen) ausgerichtet sein. Vorzugsweise sind die Sensoren jeweils paarweise senkrecht zueinander ausgerichtet. Dies ist jedoch nicht zwingend erforderlich, erleichtert aber die Auswertung der Messung. Ferner wird es bevorzugt, dass die Messrichtungen sämtlicher vier Messsensoren senkrecht zur idealen Drehachse A2 ausgerichtet sind. Optional kann zusätzlich noch ein weiterer Messsensor verwendet werden, der die z-Position des oberen Teils des Kalibrierkörpers (in Fig. 4 also des ersten kugelförmigen Bereichs K1) misst.

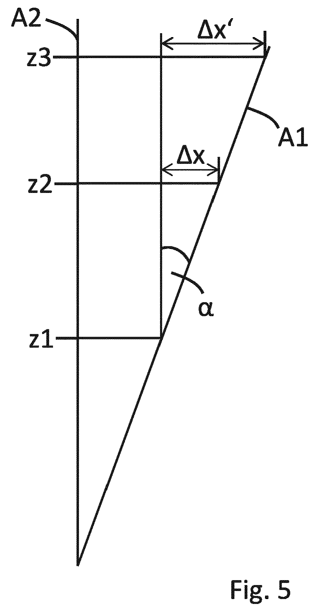

Bei verschiedenen Drehstellungen des drehbaren Teils 11 relativ zu dem feststehenden Teil 12 der Drehvorrichtung, z.B. in Winkelabständen von jeweils 1°, wird nun in den Messrichtungen s2 - s5 jeweils der Abstand zu den kugelförmigen Bereichen K1, K2 und/oder die Position des kugelförmigen Bereichs K1, K2 oder dessen Oberfläche gemessen. Auf diese Weise werden von den vier Messsensoren die x- und y-Komponenten des Gesamtfehlers der Drehvorrichtung an zwei verschiedenen z-Positionen gemessen. Daraus lassen sich der translatorische Fehler und der rotatorische Fehler der Drehvorrichtung bestimmen. Der translatorische Fehler ist dadurch definiert, dass er sich über den gesamten Bereich der möglichen Arbeitspositionen (bzw. die gesamte Höhe, hier: in z-Richtung) in gleicher Weise auswirkt, jedoch von der Drehposition des drehbaren Teils abhängt. Dagegen wirkt sich der rotatorische Fehler über den gesamten Bereich der möglichen Arbeitspositionen unterschiedlich aus. Darauf wird noch näher anhand von Fig. 5 eingegangen. Sowohl der rotatorische Fehler als auch der translatorische Fehler hängen im Allgemeinen von der Drehposition des drehbaren Teils 11 ab. Daraus folgt, dass mit einem einzelnen Messsensor oder in einer festgelegten Arbeitsausrichtung nicht zwischen dem translatorischen und dem rotatorischen Fehler der Drehvorrichtung unterschieden werden kann. Umgekehrt folgt daraus, dass es Arbeitsausrichtungen und Arbeitspositionen gibt, für die sich der translatorische und der rotatorische Fehler besser (in Bezug auf kleinere Fehlerwerte) kompensieren als für andere Arbeitspositionen und Arbeitsausrichtungen. Darauf wird noch näher eingegangen.

Ferner wird im Folgenden davon ausgegangen, dass die Exzentrizität und die Verkippung des Kalibrierkörpers und auch des Werkstücks separat berücksichtigt und korrigiert werden können. Es wird daher weiter von einem idealen rotationssymmetrischen Kalibrierkörper ausgegangen.

Aus den gewonnenen Messwerten des Fehlers der Drehvorrichtung kann z.B. in einem ersten Schritt berechnet werden, welcher Messfehler sich bei anderen z-Positionen als bei der Messung ergeben hätte. Z.B. wurden die Messungen wie anhand von Fig. 4 beschrieben an den in Fig. 5 dargestellten unteren beiden z-Positionen z1, z2 durchgeführt. Fig. 5 zeigt eine Darstellung in der x-, z-Ebene des Koordinatensystems x, y, z. Die reale Drehachse A1 oder deren Projektion auf die x-, z-Ebene ist gegen die ideale Drehachse A2 um den Winkel $\alpha$ geneigt. Dementsprechend wird an der Position z1 z.B. eine kleinere Abweichung von der idealen Situation (die besteht, wenn die Drehbewegung um die ideale Drehachse stattfindet) festgestellt als an der Position z2. Der Unterschied des Fehlers an den z-Positionen z1, z2 beträgt $\Delta x$. Daraus lässt sich für eine dritte z-Position z3 die Abweichung in x-Richtung von der idealen Situation berechnen, wie dies in Fig. 5 angedeutet ist. In der z-Position z3 beträgt die Abweichung von der idealen Position $\Delta x'$ mehr als an der z-Position z1. Auf diese Weise lassen sich für den gesamten relevanten Bereich in z-Richtung sowohl die Abweichungen in x-Richtung als auch in analoger Weise in y-Richtung berechnen, und zwar gemäß folgender Gleichung für die Abweichung in x-Richtung:

$$x2 = x1 - \sin(\alpha) * (z1 - z2)$$

In der Formel bedeuten x1, x2 die Positionen in x-Richtung der realen Drehachse A1 bzw. deren Projektion in die x-, z-Ebene, z1, z2 die z-Positionen und $\alpha$ den in Fig. 5 dargestellten Winkel zwischen der realen Drehachse A1 und der idealen Drehachse A2. Die Gleichung ist jedoch nicht nur für die beiden z-Positionen der Fehler-Messungen gültig, sondern auch jeweils für zwei beliebige andere z-Positionen, einschließlich einer Messposition und einer zu berechnenden Position. Die Berechnung der y-Positionen erfolgt in gleicher Weise, indem in der Gleichung x2 durch y2 und x1 durch y1 ersetzt wird und die Projektion der realen Drehachse A1 auf die y-, z-Ebene betrachtet wird. Ferner wird der Winkel $\alpha$ durch einen entsprechenden Neigungswinkel ersetzt, der die Verkippung in der y-, z- Ebene beschreibt.

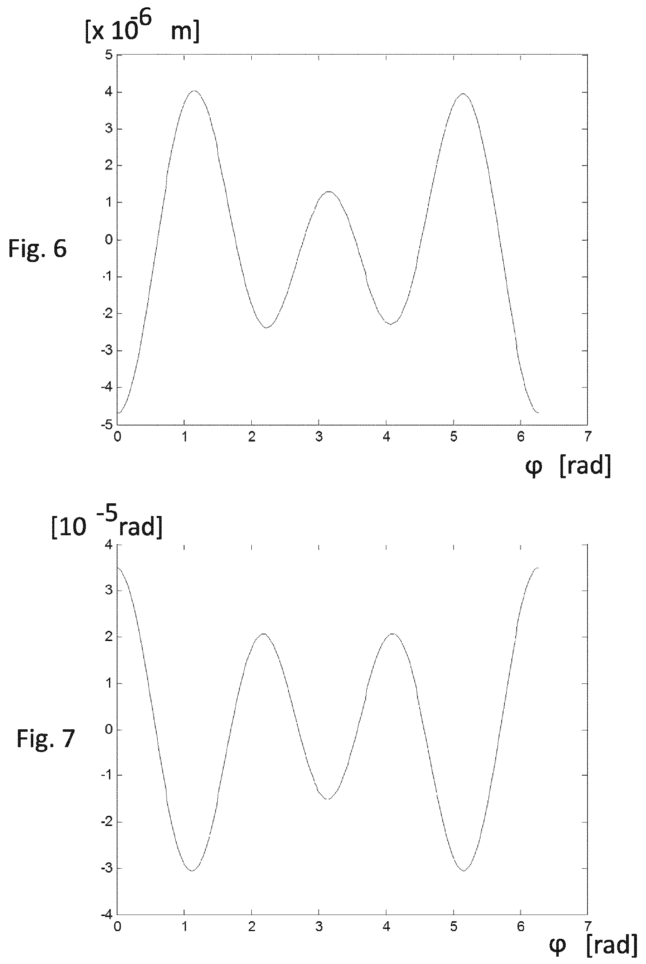

In Fig. 6 ist z.B. lediglich der translatorische Fehler einer Drehvorrichtung in x-Richtung als Funktion der Drehposition des drehbaren Teils (z.B. des Teils 11 in Fig. 1 bis Fig. 4) dargestellt. Den translatorischen Fehler erhält man wie erwähnt aus dem gemessenen Gesamtfehler, indem man als translatorischen Fehler den Anteil an dem Gesamtfehler ermittelt, der für alle z-Positionen an der jeweiligen Drehposition gleich ist.

Wie Fig. 6 zeigt, schwankt der translatorische Fehler in x-Richtung im Verlauf der Drehung des drehbaren Teils. Dargestellt ist eine gesamte Umdrehung, wie auch an der Skalierung der horizontalen Achse erkennbar ist. Entlang der vertikalen Achse sind die translatorischen Fehleranteile in x-Richtung hier in einen Bereich zwischen etwa $-5 \times 10^{-6}$ m bis $+5 \times 10^{-6}$ m dargestellt.

Der entsprechende rotatorische Fehler, der sich in x-Richtung auswirkt (d.h. der z.B. auf eine Verkippung der realen Drehachse A1 allein um die y-Achse zurückzuführen ist) ist in Fig. 7 dargestellt.

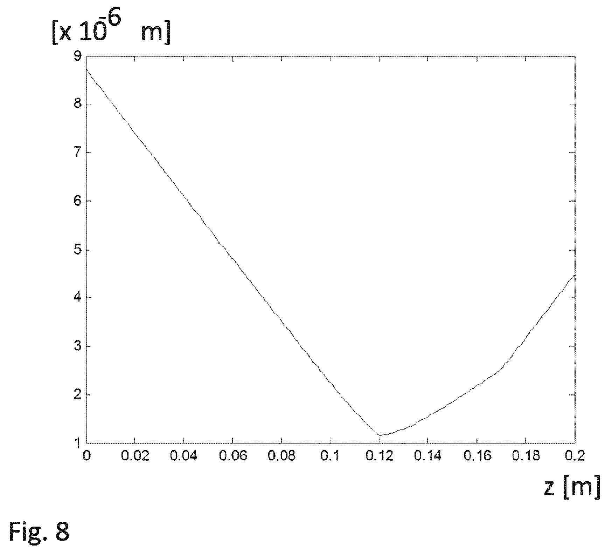

Wie bereits oben erwähnt wirkt sich der translatorische Fehler nicht in unterschiedlicher Weise innerhalb des möglichen Bereichs der z-Werte aus. Dagegen schwankt der rotatorische Fehler im Bereich der möglichen z-Werte. Auch der Gesamtfehler, der sich aus dem translatorischen und dem rotatorischen Fehler zusammensetzt, schwankt daher abhängig von der z-Position. Wenn die Arbeitsausrichtung allein durch z-Position beschrieben werden kann, etwa weil die Arbeitsausrichtung immer senkrecht auf die ideale Drehachse gerichtet ist, ergibt sich aus den in Fig. 6 und Fig. 7 dargestellten translatorischen und rotatorischen Fehlern der in Fig. 8 dargestellte Gesamtfehler in Abhängigkeit von der z-Position, d.h. in Abhängigkeit von der Arbeitsposition, die durch die z-Position eindeutig beschreibbar ist. Der Gesamtfehler wird dabei als Differenz zwischen dem Maximalwert und dem Minimalwert des Fehlers über eine gesamte Umdrehung des drehbaren Teils angegeben.

Man erkennt in Fig. 8, dass in einem Bereich von möglichen z-Positionen zwischen 0 und 0,2 m der Gesamtfehler zwischen Werten von etwa $1 \times 10^{-6}$ m und $9 \times 10^{-6}$ m liegt und etwa bei z = 0,12 m sein Minimum aufweist. Wenn daher lediglich die in Fig. 6 und Fig. 7 dargestellten Fehler auftreten (d.h. keine Fehler, die sich in y-Richtung auswirken) oder wenn die Arbeitsausrichtung parallel zur x-Achse des Koordinatensystems ausgerichtet ist, lautet daher die Empfehlung, die Arbeitsposition auf der Höhe bzw. z-Position 0,12 m zu wählen. Bei dieser Arbeitsposition und der genannten Arbeitsausrichtung ist der Fehler der Drehvorrichtung minimal.

Der zuvor beschriebene Fall, in dem lediglich Fehler in x-Richtung betrachtet wurden, wird nun auf den allgemeinen Fall erweitert, in dem auch Fehler in x-Richtung auftreten können bzw. die Arbeitsausrichtung nicht immer parallel zur x-Richtung verläuft.

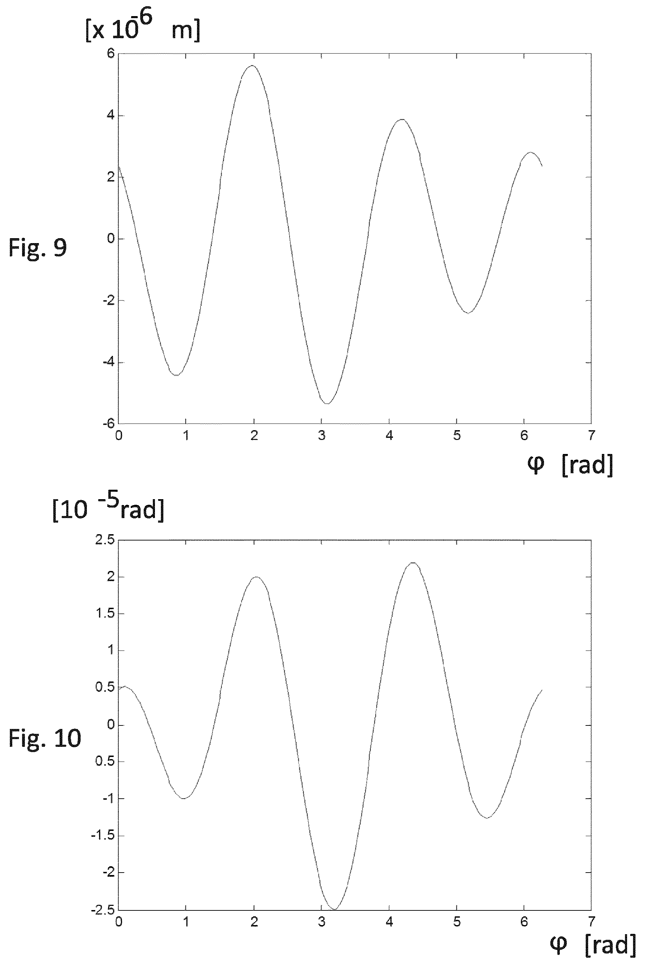

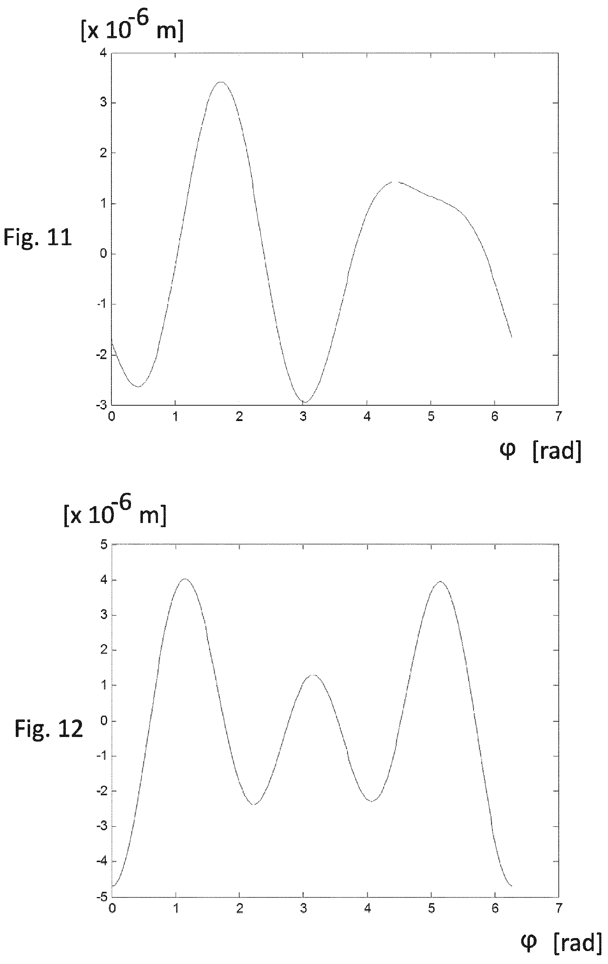

Fig. 9 und Fig. 10 zeigen die Fig. 6 und Fig. 7 entsprechenden Abhängigkeiten des translatorischen Fehlers (Fig. 9) und des rotatorischen Fehlers (Fig. 10), die sich in y-Richtung auswirken. In Fig. 11 ist der translatorische Gesamtfehler (d.h. der Gesamtfehler aus den in Fig. 6 und Fig. 9 dargestellten Fehlern) für eine bestimmte Arbeitsausrichtung dargestellt. Dieser Gesamtfehler lässt sich aus dem Fehler $s_x$, der sich in x-Richtung auswirkt, und dem Fehler $s_y$, der sich in y-Richtung auswirkt, durch folgende Gleichung berechnen:

$$s(\varphi, \vartheta) = s_x(\varphi) \cdot \cos(\vartheta) + s_y(\varphi) \cdot \sin(\vartheta)$$

Dabei bedeuten $\vartheta$ der anhand von Fig. 2 und Fig. 3 eingeführte Winkel der Arbeitsausrichtung und $\varphi$ der Drehwinkel des drehbaren Teils der Drehvorrichtung, der auch in den Diagrammen der Fig. 6, Fig. 7, Fig. 9 und Fig. 10 sowie in weiteren Diagrammen entlang der horizontalen Achse aufgetragen ist.

Man erkennt durch Vergleich von Fig. 11 mit Fig. 6 und Fig. 9, dass sich die Fehleranteile in x-Richtung und y-Richtung teilweise kompensieren. In Fig. 11 liegen die Fehlerwerte in einem kleineren Bereich als in Fig. 6 und Fig. 9. Dies ist jedoch abhängig von der gewählten Arbeitsausrichtung, d.h. zum Beispiel der Ausrichtung des Tasters, Sensors oder Werkzeugs relativ zur Drehvorrichtung. Die Arbeitsausrichtung wurde zu $\vartheta = 45°$ gewählt.

In entsprechender Weise kann der gesamte rotatorische Fehler berechnet werden, der wie auch der translatorische Gesamtfehler von der Arbeitsausrichtung, also dem Winkel $\vartheta$, abhängt und zusätzlich von der Arbeitsposition abhängt, also der Position in z-Richtung.

In den Fig. 12 bis 14 sind daher lediglich für drei ausgewählte Paare von Arbeitsposition und Arbeitsausrichtung die Abhängigkeiten des Gesamtfehlers der Translationsfehler in x-Richtung und y-Richtung sowie der Rotation in x-Richtung und y-Richtung dargestellt. Da der rotatorische Gesamtfehler sowohl von der Arbeitsausrichtung als auch der Arbeitsposition abhängt, gilt dies auch für den Gesamtfehler für Rotation und Translation.

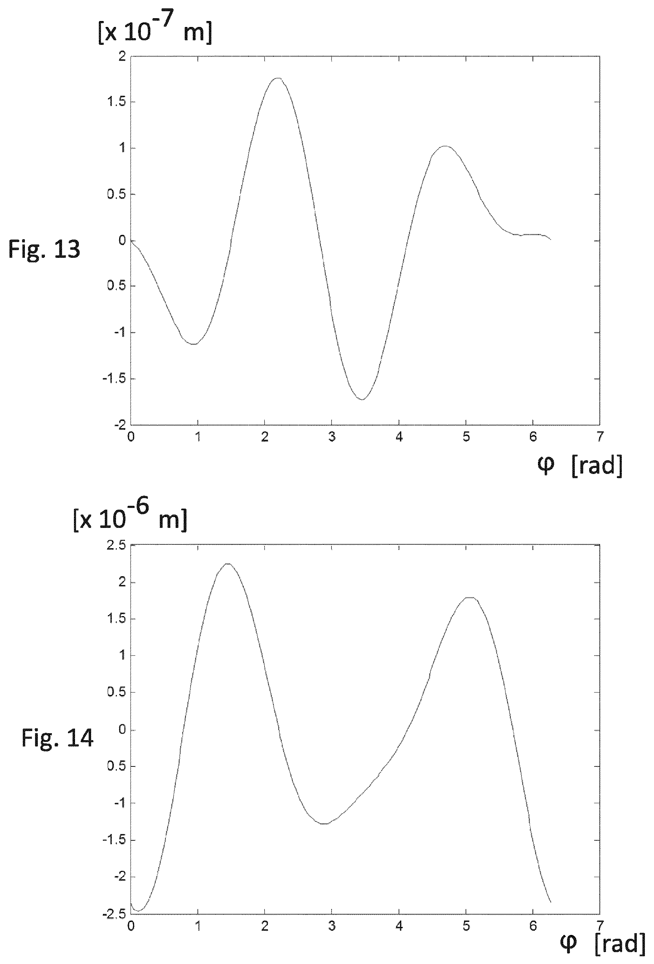

Die Arbeitsposition zu der Darstellung in Fig. 12 ist in dem Beispiel 0. Die Arbeitsausrichtung ist ebenfalls 0. Der Gesamtfehler schwankt in einem Bereich von 8,7 μm. Im Fall der Fig. 13 ist die Arbeitsposition z = 0,144 m. Die Arbeitsausrichtung beträgt $\vartheta$ = 3,3 rad. Die Werte des Gesamtfehlers schwanken über eine Umdrehung des drehbaren Teils der Drehvorrichtung in einem Bereich von 0,35 μm. Für das Ergebnis in Fig. 14 betragen die Arbeitsposition z = 0,047 m und die Arbeitsausrichtung θ = 0,34 rad. Die Fehlerwerte schwanken in einem Bereich von 4,7 μm.

Die zu dem Diagramm in Fig. 13 gehörende Arbeitsposition und Arbeitsausrichtung führt daher zu den geringsten Fehlern bei einer Umdrehung des drehbaren Teils und wäre daher im Vergleich der drei möglichen Paare von Arbeitsposition und Arbeitsausrichtung zu empfehlen.

Die Empfehlung muss nicht in allen Fällen unter Berücksichtigung einer vollständigen Umdrehung des drehbaren Teils abgegeben werden. Vielmehr sind auch Messaufgaben bzw. Bearbeitungsaufgaben denkbar, gemäß denen das drehbare Teil lediglich über einen Teilbereich einer Umdrehung verdreht werden kann. Daher können sich andere Empfehlungen für Arbeitsposition und Arbeitsausrichtung ergeben als für eine vollständige Umdrehung.

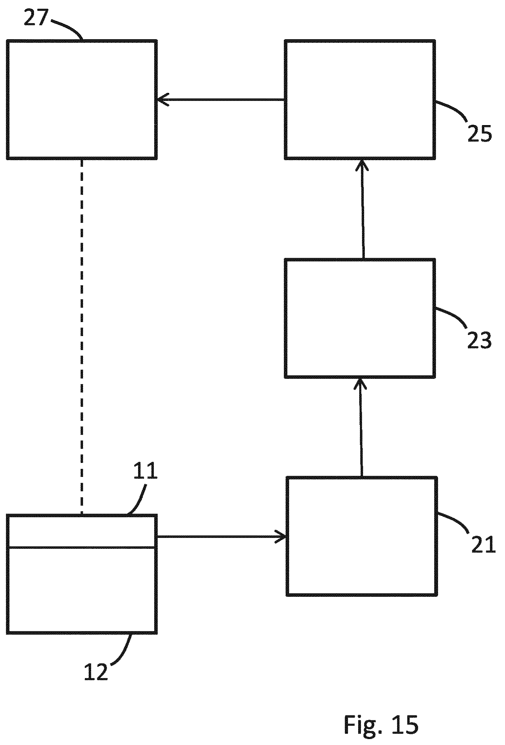

Fig. 15 zeigt schematisch eine Anordnung mit einer Drehvorrichtung, zum Beispiel der Drehvorrichtung gemäß Fig. 1 bis Fig. 4. Ein drehbarer Teil 11 der Drehvorrichtung kann relativ zu einem nicht drehbaren Teil 12 gedreht werden. Die Messanordnung 21 ist ausgestaltet, Fehler der Drehvorrichtung 11, 12 zu messen und entsprechende Fehlermesswerte einer Prognoseeinrichtung 23 zuzuführen. Diese Prognoseeinrichtung 23 ist ausgestaltet, aus den Fehlermesswerten erwartete Fehlerwerte der Drehvorrichtung 11, 12 zu ermitteln, die jeweils für eine relative Arbeitsposition und Arbeitsausrichtung einer Koordinatenmesseinrichtung zur Bestimmung der Koordinaten des Werkstücks (in Fig. 15 nicht dargestellt) oder eines Bearbeitungswerkzeugs einer Werkzeugmaschine zur Bearbeitung des Werkstücks einerseits und der Drehvorrichtung andererseits erwartet werden. Eine Ermittlungseinrichtung 25 ist mit der Prognoseeinrichtung 23 verbunden und ausgestaltet, aus den erwarteten Fehlerwerten der Drehvorrichtung 11, 12 zumindest eine Arbeitsposition und/oder Arbeitsausrichtung zu ermitteln, für die der erwartete Fehlerwert der Drehvorrichtung 11, 12 günstig ist. Die zumindest eine von der Ermittlungseinrichtung 25 ermittelte Arbeitsposition und/oder Arbeitsausrichtung wird einer Steuerung 27 des Koordinatenmessgerätes oder der Werkzeugmaschine zugeführt, die insbesondere automatisch die Vermessung eines Werkstücks oder die Bearbeitung eines Werkstücks mit der zumindest einen ermittelten Arbeitsposition und/oder Arbeitsausrichtung steuert.

**Patentansprüche**

1. Verfahren zum Reduzieren von Fehlern einer Drehvorrichtung (11, 12) bei der Bestimmung von Koordinaten eines Werkstücks (13) oder bei der Bearbeitung eines Werkstücks (13), wobei die Drehvorrichtung (11, 12) eine Drehbewegung des Werkstücks (13) um eine Drehachse (A1) der Drehvorrichtung (11, 12) während der Bestimmung der Koordinaten oder während der Bearbeitung des Werkstücks (13) ermöglicht, und wobei das Verfahren folgende Schritte aufweist:

   - Fehler der Drehvorrichtung (11, 12) aufgrund von Abweichungen zwischen tatsächlichen Positionen und tatsächlichen Ausrichtungen der Drehachse (A1) einerseits und entsprechenden idealen Positionen und idealen Ausrichtungen der Drehachse (A2) andererseits werden in einem Bereich von Drehwinkeln, d.h. bei verschiedenen Drehstellungen zweier relativ zueinander um die Drehachse drehbeweglicher Teile der Drehvorrichtung (11, 12), gemessen und entsprechende Fehlermesswerte erhalten,
   - aus den Fehlermesswerten werden erwartete Fehlerwerte der Drehvorrichtung (11, 12) ermittelt, die jeweils für eine relative Arbeitsposition und Arbeitsausrichtung einer Koordinaten-Messeinrichtung zur Bestimmung der Koordinaten des Werkstücks (13) oder eines Bearbeitungswerkzeugs einer Werkzeugmaschine zur Bearbeitung des Werkstücks (13) einerseits und der Drehvorrichtung (11, 12) andererseits erwartet werden,
   - aus den erwarteten Fehlerwerten der Drehvorrichtung (11, 12) wird zumindest eine Arbeitsposition und/oder Arbeitsausrichtung der Koordinaten-Messeinrichtung oder des Bearbeitungswerkzeugs ermittelt, für die der erwartete Fehlerwert der Drehvorrichtung (11, 12) bei einer vorgegebenen Mess-Aufgabe zur Bestimmung von Koordinaten des Werkstücks (13) oder einer vorgegebenen Bearbeitungs-Aufgabe zur Bearbeitung des Werkstücks (13)

      o kleiner ist als für andere Arbeitspositionen und/oder Arbeitsausrichtungen und/oder
      o eine vorgegebene Bedingung erfüllt.

2. Verfahren nach dem vorhergehenden Anspruch, wobei die zumindest eine aus den erwarteten Fehlerwerten der Drehvorrichtung (11, 12) ermittelte Arbeitsposition und/oder Arbeitsausrichtung an eine Steuerung der Koordinaten-Messeinrichtung oder der Werkzeugmaschine ausgegeben wird.

3. Verfahren nach einem der vorhergehenden Ansprüche, wobei die zumindest eine Arbeitsposition und/oder Arbeitsausrichtung durch Simulation der Koordinatenmessung oder Bearbeitung des Werkstücks (13) ermittelt wird.

4. Verfahren nach einem der vorhergehenden Ansprüche, wobei bei der Ermittlung der zumindest einen Arbeitsposition und/oder Arbeitsausrichtung eine Mess-Aufgabe zu Grunde gelegt wird, gemäß der die Oberfläche des Werkstücks (13) scannend abgetastet wird.

5. Verfahren nach einem der vorhergehenden Ansprüche, wobei gemäß der ermittelten zumindest einen Arbeitsposition und/oder Arbeitsausrichtung eine Messung von Koordinaten eines Werkstücks oder eine Bearbeitung des Werkstücks gesteuert wird.

6. Anordnung zum Reduzieren von Fehlern einer Drehvorrichtung (11, 12) bei der Bestimmung von Koordinaten eines Werkstücks (13) oder bei der Bearbeitung eines Werkstücks (13), wobei die Drehvorrichtung (11, 12) eine Drehbewegung des Werkstücks (13) um eine Drehachse (A1) der Drehvorrichtung (11, 12) während der Bestimmung der Koordinaten oder während der Bearbeitung des Werkstücks (13) ermöglicht, und wobei die Anordnung Folgendes aufweist:

   - eine Messanordnung (21), die ausgestaltet ist, Fehler der Drehvorrichtung (11, 12) aufgrund von Abweichungen zwischen tatsächlichen Positionen und tatsächlichen Ausrichtungen der Drehachse (A1) einerseits und entsprechenden idealen Positionen und idealen Ausrichtungen der Drehachse (A2) andererseits in einem Bereich von Drehwinkeln, d.h. bei verschiedenen Drehstellungen zweier relativ zueinander um die Drehachse (A1) drehbeweglicher Teile der Drehvorrichtung (11, 12), zu messen und entsprechende Fehlermesswerte an eine Prognoseeinrichtung auszugeben,
   - die Prognoseeinrichtung (23), die ausgestaltet ist, aus den Fehlermesswerten erwartete Fehlerwerte der Drehvorrichtung (11, 12) zu ermitteln, die jeweils für eine relative Arbeitsposition und Arbeitsausrichtung einer Koordinaten-Messeinrichtung zur Bestimmung der Koordinaten des Werkstücks (13) oder eines Bearbeitungswerkzeugs einer Werkzeugmaschine zur Bearbeitung des Werkstücks (13) einerseits und der Drehvorrichtung (11, 12) andererseits erwartet werden,
   - eine Ermittlungseinrichtung (25), die ausgestaltet ist, aus den erwarteten Fehlerwerten der Drehvorrichtung (11, 12) zumindest eine Arbeitsposition und/oder Arbeitsausrichtung der Koordinaten-Messeinrichtung oder des Bearbeitungswerkzeugs zu ermitteln, für die der erwartete Fehlerwert der Drehvorrichtung (11, 12) bei einer vorgegebenen Mess-Aufgabe zur Bestimmung von Koordinaten des Werkstücks (13) oder einer vorgegebenen Bearbeitungs-Aufgabe zur Bearbeitung des Werkstücks (13)

   o kleiner ist als für andere Arbeitspositionen und/oder Arbeitsausrichtungen und/oder
   o eine vorgegebene Bedingung erfüllt.

7. Koordinatenmessgerät mit einer Anordnung gemäß Anspruch 6.

8. Koordinatenmessgerät nach Anspruch 7, wobei die Ermittlungseinrichtung mit einer Steuerung (27) des Koordinatenmessgerätes verbunden ist, so dass die Steuerung (27) gemäß der ermittelten zumindest einen Arbeitsposition und/oder Arbeitsausrichtung der Koordinaten-Messeinrichtung eine Messung von Koordinaten eines Werkstücks steuern kann.

**Claims**

1. Method for reducing errors in a turning device (11, 12) during the determination of coordinates of a workpiece (13) or during the machining of a workpiece (13), wherein the turning device (11, 12) allows a rotational movement of the workpiece (13) about a rotation axis (A1) of the turning device (11, 12) during the determination of the coordinates or during the machining of the workpiece (13), and wherein the method comprises the following steps:

   - errors of the turning device (11, 12) due to differences between actual positions and actual orientations of the rotation axis (A1), on the one hand, and corresponding ideal positions and ideal orientations of the rotation axis (A2), on the other hand, are measured in a range of rotation angles, i.e. in different rotational positions of two parts of the turning device (11, 12) that can be moved in rotation relative to one another about the rotation axis, and corresponding error measurement values are obtained,
   - expected error values of the turning device (11, 12), which are respectively expected for a relative working position and working orientation of a coordinate measuring instrument for determining the coordinates of the workpiece (13) or of a processing tool of a machine tool for machining the workpiece (13) on the one hand, and the turning device (11, 12) on the other hand, are determined from the error measurement values,
   - at least one working position and/or working orientation of the coordinate measuring instrument or of the processing tool, for which the expected error value of the turning device (11, 12), with a predetermined measurement task for determining coordinates of the workpiece (13) or a predetermined machining task for machining the workpiece (13)

    o is less than for other working positions and/or working orientations and/or
    o satisfies a predetermined condition

is determined from the expected error values of the turning device (11, 12).

2. Method according to the preceding claim, wherein the at least one working position and/or working orientation determined from the expected error values of the turning device (11, 12) is output to a controller of the coordinate measuring instrument or of the machine tool.

3. Method according to one of the preceding claims, wherein the at least one working position and/or working orientation is determined by simulation of the coordinate measurement or machining of the workpiece (13).

4. Method according to one of the preceding claims, wherein the determination of the at least one working position and/or working orientation is based on a measurement task, according to which the surface of the workpiece (13) is sampled in a scanning fashion.

5. Method according to one of the preceding claims, wherein a measurement of coordinates of a workpiece or machining of the workpiece is controlled according to the at least one working position and/or working orientation which has been determined.

6. Arrangement for reducing errors in a turning device (11, 12) during the determination of coordinates of a workpiece (13) or during the machining of a workpiece (13), wherein the turning device (11, 12) allows a rotational movement of the workpiece (13) about a rotation axis (A1) of the turning device (11, 12) during the determination of the coordinates or during the machining of the workpiece (13), and wherein the arrangement comprises the following:

    - a measuring arrangement (21), which is configured in order to measure errors of the turning device (11, 12) due to differences between actual positions and actual orientations of the rotation axis (A1), on the one hand, and corresponding ideal positions and ideal orientations of the rotation axis (A2), on the other hand, in a range of rotation angles, i.e. in different rotational positions of two parts of the turning device (11, 12) that can be moved in rotation relative to one another about the rotation axis (A1), and to output corresponding error measurement values to a prognosis instrument,
    - the prognosis instrument (23), which is configured in order to determine expected error values of the turning device (11, 12), which are respectively expected for a relative working position and working orientation of a coordinate measuring instrument for determining the coordinates of the workpiece (13) or of a processing tool of a machine tool for machining the workpiece (13) on the one hand, and the turning device (11, 12) on the other hand, from the error measurement values,
    - a determination instrument (25), which is configured in order to determine from the expected error values of the turning device (11, 12) at least one working position and/or working orientation of the coordinate measuring instrument or of the processing tool, for which the expected error value of the turning device (11, 12), with a predetermined measurement task for determining coordinates of the workpiece (13) or a predetermined machining task for machining the workpiece (13)

    o is less than for other working positions and/or working orientations and/or
    o satisfies a predetermined condition.

7. Coordinate measuring apparatus comprising an arrangement according to Claim 6.

8. Coordinate measuring apparatus according to Claim 7, wherein the determination instrument is connected to a controller (27) of the coordinate measuring apparatus, so that the controller (27) can control a measurement of coordinates of a workpiece according to the at least one working position and/or working orientation of the coordinate measuring instrument which has been determined.

**Revendications**

1. Procédé de réduction des défauts d'un ensemble de rotation (11, 12) dans la détermination des coordonnées d'une pièce (13) ou dans le traitement d'une pièce (13),
l'ensemble de rotation (11, 12) permettant un déplacement de rotation de la pièce (13) autour d'un axe de rotation (A1) de l'ensemble de rotation (11, 12) pendant la détermination des coordonnées ou pendant le traitement de la pièce (13),
le procédé comportant les étapes suivantes :

    les défauts de l'ensemble de rotation (11, 12) sont mesurés sur la base d'écarts entre des positions effectives et des orientations effectives de l'axe de rotation (A1), d'une part, et des positions idéales et orientations idéales qui y correspondent pour l'axe de rotation (A2), d'autre part, dans une plage d'angles de rotation, c'est-à-dire en différentes positions de rotation de deux parties de l'ensemble de rotation (11, 12) aptes à tourner l'une par rapport à l'autre autour de l'axe de rotation, et des valeurs de mesure d'erreurs qui y correspondent sont obtenues,
à partir des valeurs de mesure d'erreurs, des valeurs attendues d'erreurs de l'ensemble de rotation (11, 12) qui sont attendues pour une position relative de travail et une orientation relative de travail d'un dispositif de mesure de coordonnées utilisé pour déterminer les coordonnées de la pièce (13) ou d'un outil de traitement d'une machine-outil de traitement de la pièce (13), d'une part, et de l'ensemble de rotation (11, 12), d'autre part, sont attendues,
à partir des valeurs d'erreurs attendues de l'ensemble de rotation (11, 12), au moins une position de travail et/ou une orientation de travail du dispositif de mesure de coordonnées ou de l'outil de traitement, pour laquelle la valeur attendue de l'erreur de l'ensemble de rotation (11, 12), pour une donnée prédéterminée de mesure de détermination des coordonnées de la pièce (13) ou une donnée prédéterminée de traitement pour le traitement de la pièce (13),

est plus petite que pour d'autres positions de travail et/ou d'autres orientations de travail et/ou remplit une condition prédéterminée, sont déterminées.

2. Procédé selon la revendication précédente, dans lequel la ou les positions de travail et/ou la ou les orientations de travail déterminées à partir des valeurs attendues d'erreurs de l'ensemble de rotation (11, 12) sont délivrées à une commande du dispositif de mesure de coordonnées ou de la machine-outil.

3. Procédé selon l'une des revendications précédentes, dans lequel la ou les positions de travail et/ou la ou les orientations de travail sont déterminées par simulation de la mesure de coordonnées ou du traitement de la pièce (13).

4. Procédé selon l'une des revendications précédentes, dans lequel lors de la détermination de la ou des positions de travail et/ou de la ou des orientations de travail, une donnée de mesure selon laquelle la surface de la pièce (13) est palpée par balayage est prise en compte.

5. Procédé selon l'une des revendications précédentes, dans lequel selon la ou les positions de travail et/ou la ou les orientations de travail, une mesure de coordonnées d'une pièce ou un traitement de la pièce sont commandés.

6. Système de réduction des erreurs d'un ensemble de rotation (11, 12) lors de la détermination des coordonnées d'une pièce (13) ou lors du traitement d'une pièce (13),
l'ensemble de rotation (11, 12) permettant un déplacement de rotation de la pièce (13) autour d'un axe (A1) de l'ensemble de rotation (11, 12) pendant la détermination des coordonnées ou pendant le traitement de la pièce (13),
le système présentant ce qui suit :

un système de mesure (21) configuré pour mesurer les défauts de l'ensemble de rotation (11, 12) sur la base d'écarts entre des positions effectives et des orientations effectives de l'axe de rotation (A1), d'une part, et des positions idéales et orientations idéales qui y correspondent pour l'axe de rotation (A2), d'autre part, dans une plage d'angles de rotation, c'est-à-dire en différentes positions de rotation de deux parties de l'ensemble de rotation (11, 12) aptes à tourner l'une par rapport à l'autre autour de l'axe de rotation (A1) et pour délivrer des valeurs de mesure d'erreurs qui y correspondent à un dispositif de pronostic,
un dispositif de pronostic (23) configuré pour déterminer à partir des valeurs de mesure d'erreurs des valeurs attendues d'erreurs de l'ensemble de rotation (11, 12) qui sont attendues pour une position relative de travail et une orientation de travail d'un dispositif de mesure de coordonnées utilisé pour déterminer les coordonnées de la pièce (13) ou d'un outil de traitement d'une machine-outil utilisée pour le traitement de la pièce (13), d'une part, et de l'ensemble de rotation (11, 12), d'autre part, et
un dispositif de détermination (25) configuré pour déterminer à partir des valeurs attendues d'erreurs de l'ensemble de rotation (11, 12) au moins une position de travail et/ou une orientation de travail du dispositif de mesure de coordonnées ou de l'outil de traitement, pour laquelle la valeur attendue de l'erreur de l'ensemble de rotation (11, 12), pour une donnée prédéterminée de mesure de détermination des coordonnées de la pièce (13) ou une donnée prédéterminée de traitement pour le traitement de la pièce (13),

est plus petite que pour d'autres positions de travail et/ou d'autres orientations de travail et/ou remplit une condition prédéterminée, sont déterminées.

7. Appareil de mesure de coordonnées présentant un système selon la revendication 6.

8. Appareil de mesure de coordonnées selon la revendication 7, dans lequel le dispositif de détermination est raccordé à une commande (27) de l'appareil de mesure de coordonnées de telle sorte que la commande (27) puisse commander une mesure des coordonnées d'une pièce selon la ou les positions de travail déterminées et/ou la ou les orientations de travail déterminées du dispositif de mesure de coordonnées.

**Fig.1**

**Fig.2**

**Fig.3**

Fig.4

Fig. 5

Fig. 6

Fig. 7

Fig. 8

[x $10^{-6}$ m]

Fig. 9

$\varphi$ [rad]

[$10^{-5}$ rad]

Fig. 10

$\varphi$ [rad]

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19815098 A1
- DE 102005023
- JP 05162051 A

**In der Beschreibung aufgeführte Nicht-Patentliteratur**

- **ERIC MARSH.** Precision Spindle Metrology